# EUROPÄISCHE PATENTSCHRIFT

(11) **EP 0 835 402 B1**
(45) Veröffentlichungstag und Bekanntmachung des Hinweises auf die Patenterteilung: **23.06.1999**
(21) Anmeldenummer: 95910442.3
(22) Anmeldetag: 03.03.1995
(51) Int. Cl.: F16K 17/06, F16K 27/02, F02M 69/54, G05D 16/06

(54) **DRUCKREGELVENTIL**
PRESSURE REGULATOR
SOUPAPE DE REGULATION DE PRESSION

(30) Priorität: 17.03.1994 DE 4409133
(43) Veröffentlichungstag der Anmeldung: 15.04.1998
(73) Patentinhaber: ROBERT BOSCH GMBH, 70442 Stuttgart (DE)
(72) Erfinder: HERBST, Kurt, D-71576 Burgstetten (DE)
(86) Internationale Anmeldenummer: DE9500287
(87) Internationale Veröffentlichungsnummer: WO9525235

(56) Entgegenhaltungen:
- EP-A- 0 097 581
- DE-A- 2 816 479
- DE-U- 8 703 065
- FR-A- 2 184 264
- GB-A- 2 173 883
- US-A- 3 911 950
- US-A- 4 505 296
- US-A- 4 825 835
- US-A- 5 092 361

## Beschreibung

### Stand der Technik

Die Erfindung geht aus von einem Druckregelventil nach der Gattung des Patentanspruchs 1. Bekannt ist ein die Gattung bildendes Druckregelventil (US-A-4,505,296), bei dem der Deckel mit einem Unterteil und einem Oberteil sowie der Grundkörper aus Metall gefertigt sind. Zur Einstellung der Kraft der an dem Oberteil angreifenden Druckfeder ist das Oberteil innerhalb des Unterteiles verschiebbar. Das Druckregelventil ist in einen Brennstoffversorgungskörper eingeschraubt, mit dem die Brennstoffleitung verbunden ist. Es ist auch ein anderes Druckregelventil bekannt (DE-A-28 16 479), bei dem das Ventilgehäuse aus Tiefziehblechteilen gebildet ist und zur Einstellung der Kraft der in Schließrichtung des Druckregelventils wirkenden Druckfeder der Boden des Ventildeckels, an dem die Druckfeder anliegt, verformt wird. Hierbei ist nachteilig, daß die Blechverformung zur Herstellung des Ventilgehäuses einen großen Aufwand und damit erhöhte Kosten zur Folge hat.

### Vorteile der Erfindung

Das erfindungsgemäße Druckregelventil mit den kennzeichnenden Merkmalen des Hauptanspruchs hat demgegenüber den Vorteil, daß es trotz Verwendung von Kunststoff als Material für den Deckel eine exakte Einstellung der Federkraft ermöglicht, und daß seine Herstellung keine hohen Kosten zur Folge hat.

Durch die in dem abhängigen Patentanspruch aufgeführte Maßnahme ist eine vorteilhafte Weiterbildung und Verbesserung des im Patentanspruch 1 angegebenen Druckregelventiles möglich.

### Zeichnung

Ein Ausführungsbeispiel der Erfindung ist in der Zeichnung vereinfacht dargestellt und in der nachfolgenden Beschreibung näher erläutert. Es zeigen Figur 1 eine schematische Darstellung einer Brennstoffversorgungsanlage einer Brennkraftmaschine, und Figur 2 ein Druckregelventil. Figur 3 zeigt ein Ausführungsbeispiel eines erfindungsgemäßen Druckregelventiles.

### Beschreibung

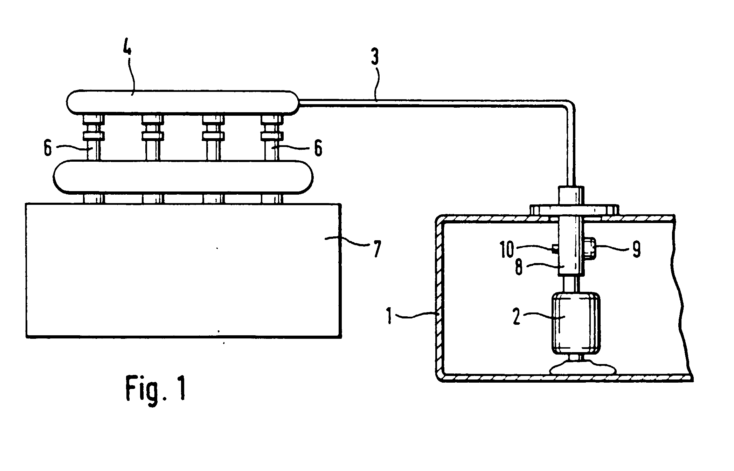

In der Figur 1 ist mit 1 ein Brennstofftank bezeichnet, in dem eine Brennstoffpumpe 2 angeordnet ist, die beispielsweise durch einen Elektromotor angetrieben wird und Brennstoff in eine Brennstoffleitung 3 fördert. Die Brennstoffleitung 3 mündet in einen sogenannten Brennstoffverteiler 4, von dem aus der Brennstoff in Einspritzventile 6 gelangt, die in den Brennstoffverteiler 4 eingesetzt sind. Die Einspritzventile 6 sind mit ihren einspritzseitigen Enden in jeweils ein Einzelsaugrohr eines Zylinders einer gemischverdichtenden fremdgezündeten Brennkraftmaschine 7 eingesetzt und spritzen Brennstoff in unmittelbarer Nähe der Einlaßventile der einzelnen Zylinder ab. Zwischen der Brennstoffpumpe 2 und der Brennstoffleitung 3 ist ein Haltekörper 8 angeordnet, durch den der von der Brennstoffpumpe geförderte Brennstoff zur Brennstoffleitung 3 strömt und der zur Aufnahme eines Druckregelventiles 9 dient. Der Haltekörper 8 liegt dabei vorzugsweise unmittelbar am Brennstofftank 1 bzw. mit dem Druckregelventil 9 innerhalb des Brennstofftanks, so daß vom Druckregelventil 9 abgeregelter Brennstoff über einen Rückströmanschluß 10 unmittelbar in den Brennstofftank 1 zurückströmen kann. Die beschriebene Kraftstoffversorgungsanlage entspricht dem sogenannten Returnless-System, bei dem der durch die Brennstoffpumpe 2 geförderte und nicht durch die Einspritzventile 6 eingespritzte überschüssige Brennstoff unmittelbar stromabwärts der Brennstoffpumpe über das Druckregelventil 9 wieder in den Brennstofftank 1 zurückgeleitet wird. Hierbei ist vorteilhaft, daß keine zusätzlichen Brennstoffleitungen für die Rückleitung des an den Einspritzventilen nicht eingespritzten Brennstoffes von dem Brennstoffverteiler 4 zum Brennstofftank 1 erforderlich sind, die der Gefahr von Beschädigungen ausgesetzt sind. Außerdem ist vorteilhaft, daß das Druckregelventil 9 an geschützter Stelle im Brennstofftank 1 angeordnet ist und der über das Druckregelventil zum Brennstofftank zurückgeleitete Brennstoff nicht der Wärme im Motorraum des Kraftfahrzeuges ausgesetzt ist und somit kühl bleibt, wodurch ein unerwünschtes Erwärmen des durch die Brennstoffpumpe geförderten Brennstoffes und damit die Gefahr des Auftretens von Dampfblasen in der Brennstoffversorgungsanlage verringert wird.

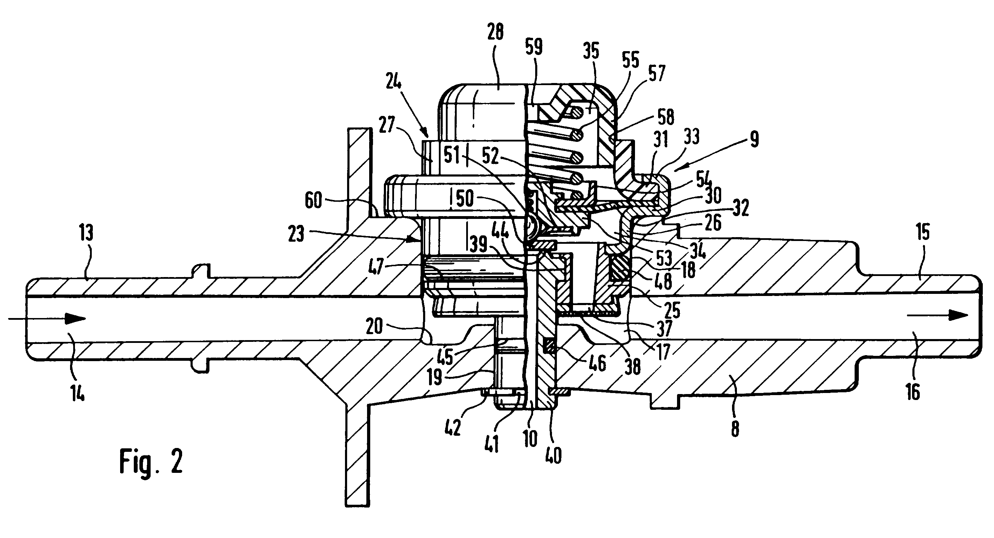

In Figur 2 ist ein Haltekörper 8 dargestellt, der aus einem metallischen oder nicht metallischen Werkstoff wie Kunststoff gefertigt sein kann. Der Haltekörper 8 hat einen Zuflußstutzen 13 mit einem Zuflußkanal 14 und einen Abflußstutzen 15 mit einem Abflußkanal 16. Im Haltekörper ist ebenfalls eine zylindrische Aufnahmeöffnung 17 ausgebildet, die quer zum Zuflußkanal 14 und Abflußkanal 16 verläuft und an der der Zuflußkanal 14 endet bzw. der Abflußkanal 16 beginnt. Die Aufnahmeöffnung 17 ist gestuft ausgebildet und weist einen ersten Stufenabschnitt 18 auf, der einen größeren Durchmesser hat als ein zweiter Stufenabschnitt 19. Der Übergang vom ersten Stufenabschnitt 18 zum zweiten Stufenabschnitt 19 mit kleinerem Durchmesser erfolgt durch einen Bodenabschnitt 20, an dem der zweite Stufenabschnitt 19 beginnt und sich bis zu dem dem ersten Stufenabschnitt 18 abgewandten Umfang des Haltekörpers 8 erstreckt.

In die Aufnahmeöffnung 17 ist das Druckregelventil 9 eingesetzt und am Haltekörper fixiert. Das Druckregelventil 9 hat einen Grundkörper 23 und einen Deckel 24. Bei dem Ausführungsbeispiel nach Figur 2 wird der Grundkörper 23 aus einem Bodenteil 25 und einem Zwischenteil 26 gebildet. Der Deckel 24 ist aus einem rohrförmigen Unterteil 27 und einem topfförmigen Oberteil 28 gebildet. Einander zugewandt weisen das Zwischenteil 26 eine Schulter 30 und das rohrförmige Unterteil 27 einen Kragen 31 auf, zwischen denen eine nachgiebige Membran 32 mittels eines sich an die Schulter 30 anschließenden und den Kragen 31 übergreifenden Bördelrandes 33 eingespannt ist. Die Membran 32 trennt eine Brennstoffkammer 34, die weiterhin von dem Bodenteil 25 und dem Zwischenteil 26 begrenzt wird, von einer Federkammer 35, die weiterhin von dem Unterteil 27 und dem Oberteil 28 begrenzt wird. Das Bodenteil 25 ist in axialer Richtung von mindestens einer Einströmöffnung 37 durchsetzt, über die Brennstoff von der Aufnahmeöffnung 17 in die Brennstoffkammer 34 strömen kann. An einer zum Bodenabschnitt 20 der Aufnahmeöffnung 17 hin gerichteten Stirnfläche des Bodenteils 25 ist ein sich über das Bodenteil und die wenigstens eine Einströmöffnung 37 in radialer Richtung erstreckendes Sieb 38 befestigt. Das Bodenteil 25 weist eine in axialer Richtung verlaufende, abgestufte Haltebohrung 39 auf, in die ein mit einem Absatz versehener Auslaßstutzen 40 eingepreßt ist, der beispielsweise noch durch einen Biegerand in der Haltebohrung 39 gehalten wird. Der Auslaßstutzen 40 ragt durch das Bodenteil 25 nach außen und durch den zweiten Stufenabschnitt 18 der Aufnahmeöffnung 17. Am Umfang des aus dem zweiten Stufenabschnitts 19 herausragenden Endes des Auslaßstutzens 40 ist eine Nut 41 ausgebildet, in die ein Sprengring 42 eingeschnappt ist, der den Querschnitt des zweiten Stufenabschnitts 19 radial überragt und damit verhindert, daß das Druckregelventil 9 aus der Aufnahmeöffnung 17 herausfallen kann. Die Schulter 30 des Zwischenteils 26 überragt radial den Querschnitt des ersten Stufenabschnitts 18 der Aufnahmeöffnung 17 und liegt an einer Auflagefläche 60 des Haltekörpers 8 an. In dem Auslaßstutzen 40 ist der Rückströmanschluß 10 ausgebildet, der zur Brennstoffkammer 34 hin an einem am Auslaßstutzen 40 ausgebildeten Ventilsitz 44 beginnt. Am Umfang des Auslaßstutzens 40 ist eine zum zweiten Stufenabschnitt 19 hin offene Dichtnut 45 ausgebildet, in der ein an dem zweiten Stufenabschnitt 19 anliegender Dichtring 46 angeordnet ist.

Das Bodenteil 25 hat an seinem Umfang eine Dichtnut 47, die einen Dichtring 48 aufnimmt, der an dem ersten Stufenabschnitt 18 anliegt. Das Zwischenteil 26 ist beispielsweise im Gegensatz zu dem als starrer fester Körper ausgebildeten Bodenteil aus Blech gestaltet, beispielsweise als Tiefziehteil, und mit dem Umfang des Bodenteils druckdicht verschweißt oder hartgelötet. Der Ventilsitz 44 kann durch eine Ventilplatte 50 geöffnet oder geschlossen werden, die mit einer Kugel 51 fest verbunden ist. Die Kugel 51 wird durch eine Halteklammer 52 derart in einem Nietkörper 53 gelagert, daß sie sich in dem Nietkörper in jeder Richtung drehen kann. Der Nietkörper 53 greift abgedichtet durch die Membran 32 hindurch und ist an seinem in die Federkammer 35 ragenden Ende mit einem dort an der Membran anliegenden Federteller 54 vernietet, an dem eine Druckfeder 55 anliegt, die die Membran 32 und die Ventilplatte 50 zum Ventilsitz 44 hin beaufschlagt. Dem Federteller 54 abgewandt stützt sich die Druckfeder 55 an dem topfförmigen Oberteil 28 ab. Das topfförmige Oberteil 28 greift mit seinem Zylinderrand 57 gleitend in eine Führungsöffnung 58 des rohrförmigen Unterteils 27 und kann in axialer Richtung so lange mehr oder weniger tief in das Unterteil hineingeschoben werden, bis die Kraft der Druckfeder 55 der Kraft entspricht, die zur Regelung eines vorbestimmten Brennstoffdruckes in der Brennstoffversorgungsanlage erforderlich ist, so daß bei einem Überschreiten des Brennstoffdruckes in der Brennstoffversorgungsanlage das Druckregelventil 9 öffnet und Brennstoff über den Rückströmanschluß 10 zum Brennstofftank 1 zurückströmen kann. Im topfförmigen Oberteil 28 ist ein Luftanschluß 59 vorgesehen, der entweder eine Verbindung der Federkammer 35 zur Atmosphäre oder in nicht dargestellter Weise zum Luftansaugrohr der Brennkraftmaschine 7 stromabwärts einer Drosselklappe herstellt. Hierdurch ergibt sich eine Abhängigkeit des geregelten Brennstoffdruckes von dem Atmosphärendruck bzw. dem Luftdruck im Ansaugrohr der Brennkraftmaschine. Das Unterteil 27 und das Oberteil 28 des Deckels 24 sind jeweils aus Kunststoff gefertigt, so daß nach Beendigung des Einstellvorganges zur Einstellung der Kraft der Druckfeder 55 diese beiden Kunststoffteile 27, 28 gegeneinander fixiert werden, z. B. durch Verschweißen oder Verkleben. Unterteil 27 und Oberteil 28 können auch mit einem Gewinde versehen werden, so daß eine Verstellung dieser beiden Teile gegeneinander mittels einer Drehbewegung erfolgt. Als äquivalente Lösung ist es natürlich auch möglich, daß das Oberteil 28 das Unterteil teilweise mit seinem Zylinderrand 57 gleitend übergreift, also das Unterteil 27 teilweise in das Oberteil 28 hineinragt.

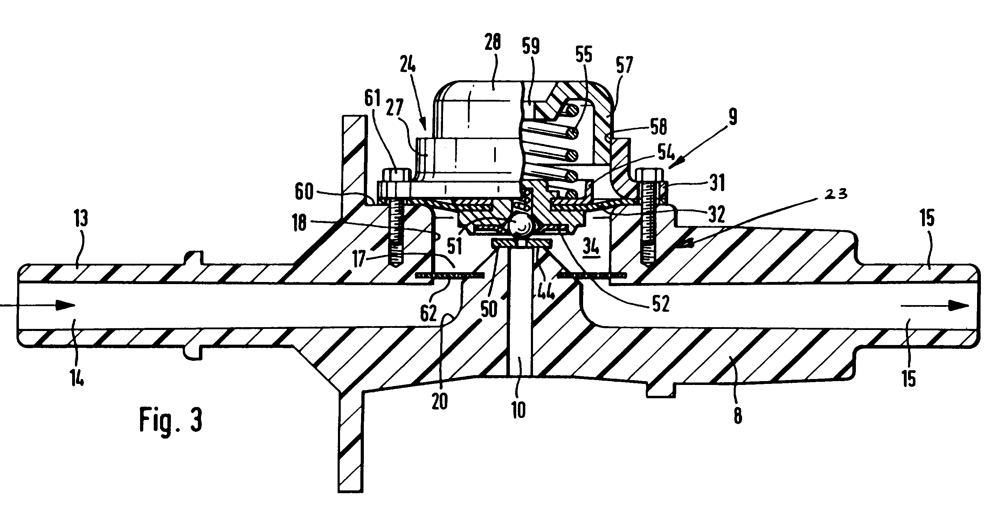

In der Figur 3 ist ein erfindungsgemäßes Ausführungsbeispiel dargestellt, bei dem die gegenüber dem Ausführungsbeispiel nach Figur 2 gleichen und gleich wirkenden Teile durch die gleichen Bezugszeichen gekennzeichnet sind. Im Gegensatz zu dem Ausführungsbeispiel nach Figur 2 hat bei dem Ausführungsbeispiel nach Figur 3 der Haltekörper 8 ebenfalls die Funktion des Grundkörpers 23 des Druckregelventils 9. Dabei liegt die Membran 32 auf der Auflagefläche 60 des Haltekörpers (oder Grungkörpers) 8 auf und überdeckt die gestufte Aufnahmeöffnung 17 des Haltekörpers 8. Der Auflagefläche 60 abgewandt greift an der Membran 32 der Kragen 31 des Unterteils 27 an. Mittels dem Kragen 31 und die Membran 32 durchgreifenden Schrauben 61 werden der Deckel 24 und die Membran 32 an den als Grundkörper dienenden Haltekörper 8 angeschraubt. Der Ventilsitz 44 des Druckregelventils ist am Bodenabschnitt 20 der Aufnahmeöffnung 17 ausgebildet, in dem auch der Rückströmanschluß 10 verläuft. Der aus Kunststoff gefertigte Haltekörper 8 ermöglicht es, daß bei der Herstellung des Haltekörpers 8 ein Sieb 62 derart mit seinem Umfang in die Wandung des ersten Stufenabschnittes 18 und mit einem radial innen liegenden Rand in die Wandung des Bodenabschnittes 20 eingespritzt wird, daß Brennstoff aus dem Zuflußkanal 14 nur über das Sieb 62 in die Brennstoffkammer 34 und von der Brennstoffkammer 34 wiederum nur über das Sieb 62 zum Abflußkanal 16 gelangen kann. Unterteil 27 und Oberteil 28 sind in der bereits zu Figur 2 beschriebenen Weise ineinander geschachtelt und gegeneinander zur Einstellung der Kraft der Druckfeder 55 axial verschiebbar und danach gegeneinander fixierbar.

## Patentansprüche

1. Druckregelventil für Brennstoffversorgungsanlagen von Brennkraftmaschinen, mit einem Deckel (24) und einem Grundkörper (8, 23), mit einer zwischen Deckel (24) und Grundkörper (8, 23) an ihrem Umfang eingespannten Membran (32) und mit einer sich am Deckel (24) abstützenden und auf die Membran (32) in Richtung zu einem im Grundkörper (8, 23) ausgebildeten Ventilsitz (44) hin wirkenden Druckfeder (55), wobei der Deckel (24) ein rohrförmiges Unterteil (27) und ein topfförmiges Oberteil (28) hat und das Unterteil (27) und das Oberteil (28) wenigstens teilweise in das andere Teil eingeschoben und mit dem anderen Teil verbunden ist und die Druckfeder (55) am topfförmigen Oberteil (28) anliegt, dadurch gekennzeichnet, daß das Unterteil (27) oder das Oberteil (28) aus Kunststoff gebildet sind und der Grundkörper (8) aus Kunststoff ausgebildet ist und einen Zuflußstutzen (13), einen Abflußstutzen (15) und einen Rückströmanschluß (10) hat, und daß zwischen Zuflußstutzen (13) und Ventilsitz (44) sowie Ventilsitz (44) und Abflußstutzen (15) ein Sieb (62) an seinem Umfang in den Grundkörper (8) eingebettet ist.

2. Druckregelventil nach Anspruch 1, dadurch gekennzeichnet, daß das Unterteil (27) und das Oberteil (28) miteinander verschweißt sind.

## Claims

1. Pressure-regulating valve for fuel supply systems of internal combustion engines, with a cap (24) and a main body (8, 23), with a diaphragm (32) clamped between the cap (24) and the main body (8, 23) at its circumference, and with a compression spring (55) which is supported on the cap (24) and acts on the diaphragm (32) in the direction of a valve seat (44) formed in the main body (8, 23), the cap (24) having a tubular lower part (27) and a cup-shaped upper part (28), and the lower part (27) and the upper part (28) being pushed at least partially into the other part and being connected to the other part, and the compression spring (55) resting on the cup-shaped upper part (28), characterized in that the lower part (27) or the upper part (28) are formed from plastic and the main body (8) is made of plastic and has an inflow stub (13), an outflow stub (15) and a return connection (10), and in that a screen ( 62) is embedded at its circumference in the main body (8), between the inflow stub (13) and the valve seat (44) and between the valve seat (44) and the outflow stub (15).

2. Pressure-regulating valve according to Claim 1, characterized in that the lower part (27) and the upper part (28) are welded together.

## Revendications

1. Soupape de régulation de pression pour installations d'alimentation de carburant de moteurs à combustion interne, qui comprend un couvercle (24) et un corps de base (8, 23), une membrane (32) enserrée sur son pourtour entre le couvercle (24) et le corps de base (8, 23) et un ressort de compression (55)prenant appui sur le couvercle (24) et agissant sur la membrane (32) en direction d'un siège de soupape (44)constitué dans le corps de base (8, 23), le couvercle (24) ayant une partie inférieure (27) de forme tubulaire et une partie supérieure (28) en forme de pot et la partie inférieure (27) et la partie supérieure (28) étant enfoncées au moins partiellement dans l'autre partie et étant reliée à l'autre partie et le ressort de compression (55) reposant sur la partie supérieure en forme de pot (28),
caractérisée en ce que
- la partie inférieure (27) ou la partie supérieure (28) est réalisée en matière plastique et en ce que le corps de base (8) est réalisé en matière plastique et a un ajutage d'arrivée (13), un ajutage de départ (15) et un raccord d'écoulement de retour (10), et
- un tamis (62) est incorporé sur son pourtour dans le corps de base 8 entre l'ajutage d'arrivée (13) et le siège (44) de la soupape ainsi qu'entre le siège (44) de la soupape et l'ajutage de départ (15).

2. Soupape de régulation de pression selon la revendication 1,
caractérisée en ce que
la partie inférieure (27) et la partie supérieure (28) sont soudées l'une à l'autre.
